# FASCICULE DE BREVET EUROPEEN

(11) **EP 2 076 704 B1**
(45) Date de publication et mention de la délivrance du brevet: **26.10.2011**
(21) Numéro de dépôt: 07848221.3
(22) Date de dépôt: 13.09.2007
(51) Int. Cl.: F16L 33/01

(54) **EMBOUT DE FIXATION DE CONDUITE TUBULAIRE FLEXIBLE À HAUTES RÉSISTANCES**
HOCHBESTÄNDIGE BEFESTIGUNGSARMATUR FÜR EINE FLEXIBLE RÖHRENLEITUNG
HIGH-RESISTANCE ATTACHMENT FITTING FOR A FLEXIBLE TUBULAR DUCT

(30) Priorité: 29.09.2006 FR 0608557
(43) Date de publication de la demande: 08.07.2009
(73) Titulaire: Technip France SA, 92400 Courbevoie (FR)
(72) Inventeur: DE AQUINO, Roberto, Jourdan, CEP-20530-560 Rio de Janeiro-RJ (BR); LANGUI, Jean-François, 29101-340 Vila Velha, ES (BR); MOZA, Jucimar Coelho, 20780-200 Rio de Janiero, RJ (BR); XAVIER, Gaspar, Cunha, CEP-20260-133 Rio de Janeiro, RJ (BR)
(74) Mandataire: Bertrand, Didier
(86) Numéro de dépôt international: PCT/FR2007/001480
(87) Numéro de publication internationale: WO 2008/037867

(56) Documents cités:
- WO-A-01/07818
- WO-A-99/19655
- WO-A-2004/051131
- US-A- 4 123 088

## Description

La présente invention se rapporte à un embout de fixation d'une conduite tubulaire flexible dont la résistance à l'arrachement de la conduite est améliorée.

Les conduites tubulaires flexibles, et notamment celles de transport des hydrocarbures en milieu marin, comprennent, de l'intérieur vers l'extérieur, d'une part une structure interne composée de plusieurs couches concentriques visant à assurer notamment l'étanchéité et la résistance aux efforts radiaux, et d'autre part au moins une nappe d'armures de traction enroulées à pas long permettant de reprendre les efforts de traction qui s'exercent sur la conduite proprement dite. Dans la présente demande, on entend par enroulement à pas long tout enroulement hélicoïdal selon un angle d'hélice inférieur à 60°. Typiquement, l'angle d'hélice des nappes d'armures de traction est compris entre 25° et 55°.

De telles conduites flexibles sont décrites dans les documents normatifs API 17J et API RP 17B publiés par l'American Petroleum Institute.

Les conduites tubulaires flexibles sous-marines installées à grande profondeur, en pratique à plus de 1000 mètres, doivent résister à des tensions très importantes. C'est particulièrement le cas des conduites montantes (« riser » en langue anglaise) reliant le fond marin à une unité de production située en surface, par exemple à une structure flottante. En effet, du fait de la grande longueur de la conduite montante, la tension exercée en partie supérieure par le poids de la conduite peut atteindre plusieurs centaines de tonnes. C'est pourquoi, les nappes d'armures de traction de telles conduites sont généralement réalisées en acier à hautes caractéristiques mécaniques. Ceci permet d'augmenter la résistance à la traction de la conduite tout en limitant son poids.

Les fils d'acier utilisés pour la fabrication de telles nappes d'armures de traction sont généralement obtenus par tréfilage à froid (« cold drawing » en langue anglaise) et/ou laminage à froid (« cold rolling » en langue anglaise). En effet, l'écrouissage (« plastic deformation » en langue anglaise) effectué à basse température lors de ces opérations permet non seulement de former précisément le fil à la géométrie souhaitée, mais aussi d'augmenter fortement sa limite élastique en traction (« tensile yield strength » en langue anglaise) et sa limite à la rupture en traction (« ultimate tensile strength » en langue anglaise). Ces procédés permettent de fabriquer à un coût avantageux des fils en acier au carbone présentant une limite en traction à la rupture supérieure à 1400 MPa. Ces fils présentent cependant l'inconvénient d'être peu ductiles et sensibles à la température, ce qui engendre des difficultés qui seront détaillées plus loin.

De tels fils sont utilisés pour la fabrication des nappes d'armures de traction des conduites tubulaires flexibles devant être installées à grande profondeur.

Un embout de fixation (« end fitting » en langue anglaise) est raccordé à chaque extrémité de chaque conduite tubulaire flexible. Bien évidemment, les efforts de traction qui s'exercent sur la conduite se répercutent également dans l'embout de fixation. Dans le cas précité de l'embout supérieur de fixation d'une conduite flexible montante, la tension transmise à l'embout peut atteindre un niveau très élevé. Le dispositif de raccordement des nappes d'armures de traction à l'embout de fixation doit donc présenter une grande résistance à l'arrachement. De plus, du fait de la houle, la structure flottante à laquelle est raccordée la conduite flexible montante peut osciller verticalement, ce qui a pour effet de faire varier la tension transmise par l'embout de fixation supérieur et donc de générer un phénomène de fatigue. Un tel chargement dynamique peut conduire dans certaines circonstances extrêmes à l'arrachement de la conduite de l'embout de fixation.

Afin d'y pallier, les armures de traction doivent être solidement ancrées dans l'embout de fixation. Pour cela, l'embout de fixation comprend généralement un manchon qui présente une partie de raccordement à la conduite et à l'opposé, une partie de fixation à la structure flottante, la partie de raccordement présentant une portion de réception des extrémités libres d'armure. L'homme du métier utilise le terme voûte de l'embout pour désigner ce manchon. La partie de raccordement et la conduite à laquelle elle est reliée sont emmanchées dans une bague qui vient coiffer la portion de réception et par là même, les extrémités des armures en formant une chambre annulaire étanche. L'homme du métier utilise le terme capot de l'embout pour désigner cette bague. Cette chambre annulaire étanche est alors garnie d'un matériau polymère durcissable qui vient emprisonner les extrémités libres des armures. Cette solution est simple à mettre en oeuvre, mais présente l'inconvénient de nécessiter une chambre annulaire étanche de grande dimensions, ce qui augmente la taille et le coût le l'embout de fixation. En effet, dans cette solution, le mécanisme d'ancrage repose uniquement d'une part sur l'adhérence entre les fils et le matériau polymère durci, et d'autre part sur l'effet cabestan (« capstan effect » en langue anglaise) lié au fait que les fils ne s'étendent pas de façon rectiligne à l'intérieur du matériau polymère durci.

Aussi, afin de réduire la taille de l'embout de fixation tout en améliorant sa résistance à l'arrachement, il a été imaginé des solutions comportant des moyens supplémentaires de blocage. Ces moyens supplémentaires consistent à déformer localement les extrémités des fils d'armures et à emprisonner ces zones déformées dans le matériau polymère durci de la chambre annulaire étanche.

Ainsi, le document US 6,412,825 divulgue une solution dans laquellle ces déformations locales ont la forme d'une vrille ou torsade («twist » en langue anglaise.). Le document US 6 161,880 divulgue une autre solution dans laquelle ces déformations locales ont la forme d'une vague. On connaît aussi une troisième solution, divulguée notamment à la figure 3 du document FR2816389, dans laquelle ces déformations locales consistent en des crochets.

Ces solutions connues présentent cependant l'inconvénient d'être difficiles à mettre en oeuvre dans le cas de fils d'armure présentant des caractéristiques mécaniques élevées. En effet, de tels fils présentent l'inconvénient d'être peu ductiles, si bien qu'il est difficile de fabriquer à température ambiante les déformations locales en forme de torsade, de vague ou de crochet. De plus, le fil peut se fissurer au niveau de ces zones fortement déformées à froid, ce qui peut avoir pour effet de réduire la résistance à l'arrachement de l'embout de fixation, en particulier dans le cas de sollicitations en fatigue. Pour éviter ce problème de fissuration, il est possible de chauffer localement les fils avant de les déformer. Cependant, cette solution présente l'inconvénient de faire chuter de façon importante les caractéristiques mécaniques des fils et donc d'affecter la résistance à l'arrachement de l'embout de fixation. Par conséquent, quelle que soit la solution retenue pour créer les déformations locales, à savoir déformation à froid ou déformation à chaud, il y a une déchéance importante dans le cas de fils présentant des caractéristiques mécaniques élevées, ce qui impose l'emploi d'une chambre annulaire de grandes dimensions, et donc augmente significativement la taille et le coût des embouts de fixation destinés aux applications de mer profonde.

Le document EP 1 206 659 divulgue une autre solution destinée principalement aux conduites flexibles présentant des armures de traction en matériaux composites, mais pouvant aussi être appliquée à des armures en acier. Pour cela, des trous de blocage axiaux sont pratiqués dans une partie formant un collet solidaire de la partie de raccordement et les armures enfilées dans ces trous de blocage, sont équipées d'éléments élargisseurs pour élargir localement la section droite des armures et les bloquer ainsi en translation à travers le collet. Les éléments élargisseurs sont insérés en coin dans une fente axiale pratiquée dans l'armure. Le document WO 20041051131 divulgue des caractéristiques similaires

Cependant, un tel montage requiert non seulement une transformation substantielle des embouts de fixation actuellement mis en oeuvre pour pouvoir percer des trous de blocage, mais aussi il nécessite de fendre axialement avec précision les armures de traction. Ces aménagements et ces modes de mise en oeuvre, sont à la fois coûteux en matériel et en temps. De plus, ce montage nécessite une grande précision de montage, ceci afin de s'assurer que les différents fils sont bloqués avec la même tension et que les jeux axiaux des différents moyens de blocage sont identiques pour l'ensemble des fils. Dans le cas contraire, la tension ne se répartit pas de façon homogène à l'ensemble des fils, ce qui génère le risque que certains fils excessivement chargés finissent par se rompre, ce qui augmente ensuite le chargement des autres fils et peut finir par provoquer une rupture en cascade et un arrachement de l'embout.

Un problème qui se pose alors et que vise à résoudre la présente invention est de fournir un embout de fixation de conduite tubulaire flexible qui non seulement soit susceptible d'être réalisé à un coût avantageux mais au surplus, qui puisse mieux résister à l'arrachement que la plupart de ceux des conduites flexibles faisant actuellement partie de l'état de la technique.

Dans le but de résoudre ce problème, la présente invention, selon un premier objet, propose un embout de fixation d'une conduite tubulaire flexible, ladite conduite tubulaire flexible comprenant au moins une nappe d'armures de traction enroulées à pas long, ledit embout de fixation comprenant une bague et un manchon, ledit manchon présentant une partie de raccordement à ladite conduite et à l'opposé une partie de fixation, ladite partie de raccordement présentant une portion de réception des armures et ladite partie de raccordement étant apte à être engagée dans ladite bague pour former une chambre annulaire autour de ladite portion de réception, lesdites armures de ladite nappe d'armures de traction présentant une extrémité libre d'armure adaptée à venir s'étendre dans ladite chambre annulaire lorsque ledit manchon est monté sur ladite conduite, ladite chambre annulaire étant apte à recevoir une coulée d'un matériau adapté à prendre en masse à l'intérieur de ladite chambre annulaire, les extrémités libres d'armures présentant respectivement des moyens d'ancrage adaptés à être emprisonnés dans ledit matériau pris en masse pour bloquer lesdites extrémités libres en translation dans ladite chambre annulaire ; selon l'invention, lesdits moyens d'ancrage comprennent respectivement un élément élargisseur fixé sur lesdites extrémités libres d'armure.

Ainsi, une caractéristique de l'invention réside dans la mise en oeuvre d'éléments élargisseurs, fixés sur les extrémités libres, qui permettent d'élargir localement les extrémités libres d'armure. De la sorte, les moyens d'ancrage noyées dans le matériau pris en masse de la chambre annulaire, sont totalement bloqués en translation puisque les chemins de passage délimités dans le matériau par les extrémités libres présentent une section insuffisante pour autoriser le passage des éléments élargisseur. Par conséquent, les efforts de traction qui s'exercent sur les armures sont notamment repris par le matériau pris en masse et par le manchon et ce par l'intermédiaire des éléments élargisseurs. Ces derniers, en surépaisseur des extrémités libres, sont bloqués en translation à l'entrée des chemins de passage précités..

En outre, lesdits éléments élargisseurs sont soudés auxdites extrémités libres d'armure, de telle manière que les efforts de traction qui s'exercent sur les armures et qui se transmettent à leurs extrémités libres soient non seulement repris par les forces d'adhérence et l'effet cabestan qui s'exercent entre le matériau durci et les extrémités libres mais aussi, par les éléments élargisseurs, par l'intermédiaire de leurs soudures. Car en effet, l'armure qui définit un chemin de passage à l'intérieur du matériau durci ne peut bien évidemment pas y coulisser puisque l'élargissement local interdit l'extrémité libre d'armure de s'engager dans ce chemin de passage. Par ailleurs, quand bien même les efforts de traction seraient importants, ils ne pourraient provoquer ni la déformation ni le rétrécissement de l'élargissement local.

Avantageusement, lesdits éléments élargisseurs sont formés en acier et ils sont ainsi plus aisément soudables, par exemple à l'arc électrique ou avec tout autre moyen comme on l'expliquera ci-après.

De plus, selon un mode de mise en oeuvre de l'invention particulièrement avantageux, lesdits éléments élargisseurs et lesdites extrémités libres d'armure présentent respectivement au moins une portion de surface d'élément élargisseur et une portion de surface d'extrémité libre d'armure qui forment ensemble une cavité ouverte vers l'extérieur délimitée par une surface concave, par exemple du type rainure en retrait. Ladite cavité ouverte est remplie d'un métal d'apport en fusion pour souder et solidariser ensemble lesdites portions de surface. Ainsi, le métal d'apport est-il confiné dans cette cavité ouverte et il forme alors un amas de soudure plus cohérent et plus résistant. Préférentiellement, lesdites, portion de surface d'élément élargisseur et portion de surface d'extrémité libre d'armure, s'étendent respectivement longitudinalement pour former une cavité longitudinale ouverte vers l'extérieur et de la sorte, la cavité ouverte est garnie d'un cordon de soudure assurant une meilleure adhésion entre les deux portions de surface. Par conséquent, la force de liaison entre l'extrémité libre d'armure et l'élément élargisseur est augmentée.

Selon une première variante de réalisation de l'invention, lesdits éléments élargisseurs s'étendent longitudinalement et ils présentent une section droite sensiblement rectangulaire et identique à la section droite desdites extrémités libres d'armure. Ainsi, ils peuvent non seulement être réalisés à un coût avantageux en prélevant préalablement des portions d'armure, mais aussi, ayant les mêmes caractéristiques, ils sont susceptibles d'être soudés ensemble avec un cordon de soudure adhérant de façon identique sur les deux.

De manière préférentielle, lesdits éléments élargisseurs et lesdites extrémités libres d'armure présentent respectivement des arêtes latérales chanfreinées de façon à former latéralement des cavités longitudinales en V, lorsque lesdits éléments élargisseurs sont respectivement appliqués longitudinalement sur lesdites extrémités libres d'armure. Ainsi, non seulement la cavité longitudinale ainsi formée permet un confinement idéal du métal d'apport pour former le cordon de soudure, mais au surplus, les efforts de traction sont transmis longitudinalement sur le cordon de soudure. Cela permet une plus grande résistance de la soudure proprement dite. Ainsi, il a été découvert que ce mode de réalisation de l'invention permet d'atteindre une grande résistance mécanique, et ceci malgré la déchéance des caractéristiques mécaniques de l'acier au niveau de la soudure et de sa zone affectée thermiquement. (« Heat Affected Zone » en langue anglaise). Ainsi, en limitant la section des cavités longitudinales à une valeur inférieure à 20% de la section du fil, avantageusement 15%, et en choisissant une longueur de cordon de soudure de l'ordre de 20 à 30mm, il est possible de réaliser un dispositif de blocage présentant une résistance à la rupture en traction supérieure à 90% de la résistance à la rupture en traction du fil d'armure. La charge non reprise par ce dispositif de blocage peut aisément être reprise par l'effet d'adhérence et l'effet cabestan, sans qu'il soit nécessaire d'augmenter significativement la taille de la chambre annulaire et le coût de l'embout de fixation.

Avantageusement, lesdites arêtes latérales sont chanfreinées de façon que lesdites, portion de surface d'élément élargisseur et portion de surface d'extrémité libre d'armure soient respectivement inclinées l'une de l'autre d'un angle compris entre 70° et 110°, préférentiellement de l'ordre de 90°.

Selon une seconde variante de réalisation de l'invention, lesdites extrémités libres d'armure présentent une section droite circulaire, tandis que lesdits éléments élargisseurs s'étendent respectivement au moins partiellement autour desdites extrémités libres d'armure. Par exemple, l'élément élargisseur est formé d'une bague montée par frettage thermique sur l'extrémité libre d'armure.

Selon un second aspect, la présente invention propose une méthode de raccordement d'un embout de fixation et d'une conduite tubulaire flexible, ladite conduite tubulaire flexible comprenant au moins une nappe d'armures de traction enroulées à pas long, lesdites armures de ladite nappe d'armures de traction présentant une extrémité libre d'armure, ledit embout de fixation comprenant une bague et un manchon, ledit manchon présentant une partie de raccordement à ladite conduite et à l'opposé une partie de fixation, ladite partie de raccordement présentant une portion de réception des armures, ladite méthode de raccordement étant du type selon laquelle : on monte ledit manchon à l'extrémité de ladite conduite tubulaire flexible ; on forme des moyens d'ancrage aux extrémités libres d'armures ; on étend lesdites extrémité libre d'armure au droit de ladite portion de réception ; on engage ladite bague autour de ladite partie de raccordement pour former une chambre annulaire autour de ladite portion de réception ; on coule un matériau adapté à prendre en masse à l'intérieur de ladite chambre annulaire pour emprisonner lesdits moyens d'ancrage et bloquer lesdites extrémités libres en translation dans ladite chambre annulaire ; selon l'invention, on fixe un élément élargisseur sur lesdites extrémités libres d'armure pour former lesdits moyens d'ancrage.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'une armure de traction pour un embout de fixation d'une conduite tubulaire flexible conformément à un premier mode de mise en oeuvre de l'invention ;
- la Figure 2 est une vue schématique en section droite d'un élément illustré sur la Figure 1 ;
- la Figure 3 est une vue schématique partielle en perspective d'une armure de traction pour un embout de fixation d'une conduite tubulaire flexible conformément à un deuxième mode de mise en oeuvre de l'invention ;
- la Figure 4 est une vue schématique partielle en perspective d'une armure de traction selon un troisième mode de mise en oeuvre de l'invention ;
- la Figure 5 est une vue schématique partielle en perspective d'une armure de traction selon un quatrième mode de mise en oeuvre de l'invention ; et,
- la Figure 6 est une vue schématique partielle en demi-coupe axiale d'un embout de fixation d'une conduite tubulaire flexible conforme à l'invention.

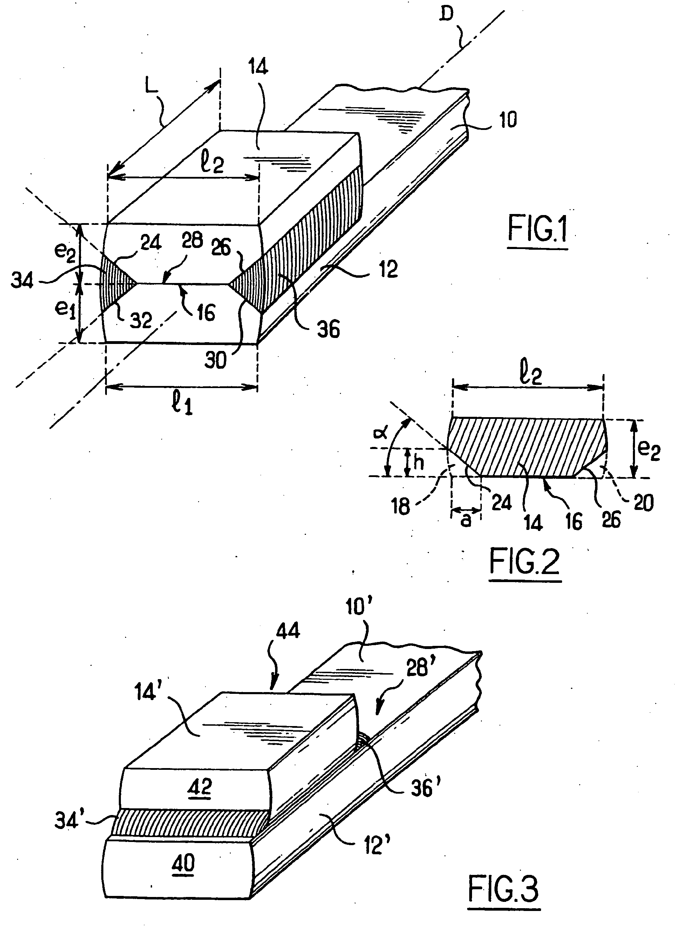

La Figure 1 illustre partiellement une armure 10 faite d'un fil d'acier plat. Ce fil d'acier plat est de section sensiblement rectangulaire, d'une largeur 11 comprise entre 5 mm et 30 mm, par exemple 15 mm et d'une épaisseur e1 comprise entre 2 mm et 7 mm, par exemple 5 mm. Cette armure 10 présente une extrémité libre d'armure 12 sur laquelle est appliqué un élément élargisseur 14 de section rectangulaire, de largeur 12, d'épaisseur e2, et de longueur L de manière à former des moyens d'ancrage.

On se référera à la Figure 2, illustrant en section droite l'élément élargisseur 14 pour ensuite revenir à la Figure 1 et détailler son mode de fixation à l'extrémité libre d'armure 12. Avantageusement,l'élément élargisseur 14 est réalisé à partir d'un échantillon d'armure prélevé en extrémité de l'armure 10, ledit prélèvement pouvant être effectué lors de l'opération de montage de l'embout de fixation. Ainsi, l'élément élargisseur 14 d'une part et l'extrémité libre d'armure 12 d'autre part possèdent non seulement les mêmes caractéristiques dimensionnelles en coupe droite mais aussi les mêmes caractéristiques physiques, ce qui facilite le soudage de ces deux pièces tout en améliorant la résistance mécanique des soudures L'élément élargisseur 14 présente une surface de contact 16 adaptée à venir s'appliquer contre la surface externe de l'extrémité libre d'armure. De plus, deux arêtes latérales 18, 20 opposées qui bordent la surface de contact 16 sont abattues, ou chanfreinées, pour former des portions de surface 24, 26 sensiblement planes et qui s'étendent longitudinalement avec une inclinaison α par rapport au plan moyen défini par la surface de contact 16 compris entre 35° et 55°, par exemple 45° Ces portions de surface 24, 26 sont aussi appelées chanfreins. Les deux chanfreins 24, 26 ont avantageusement des dimensions identiques. Ils présentent une hauteur h et une largeur a qui correspondent respectivement à l'épaisseur maximale et à la largeur maximale de la partie abattue vue en section droite. On notera que lorsque l'angle d'abattage est de 45°, la largeur a est égale à la hauteur h.

On se reportera à nouveau à la Figure 1, sur laquelle l'extrémité libre d'armure 12 a été façonnée de manière symétrique à l'élément élargisseur 14 qui s'y applique. Ainsi, l'extrémité libre d'armure 12 présente une surface d'appui 28, formant une surface externe libre, dont deux arêtes latérales qui la bordent ont également été abattues pour former deux portions de surface 30, 32. Ces deux dernières portions de surface 30, 32 sont respectivement symétriques des deux autres portions de surface 26, 24 des éléments élargisseurs 14 par rapport à la surface de contact 16 ou à la surface d'appui 28 qui sont ici confondues. De la sorte, lorsque par exemple l'inclinaison α précitée est de 45°, à la fois pour les portions de surface 26, 24 d'élément élargisseur 14 et symétriquement pour les portions de surface 30, 32 d'extrémité libre d'armure 12, les portions de surface sont deux à deux inclinées d'un angle de 90° et elles définissent une cavité longitudinale ouverte en V. Les deux cavités ouvertes ainsi formées s'étendent longitudinalement sur la longueur L correspondant à la longueur de l'élément élargisseur 14.

Ainsi que l'illustre la Figure 1, les portions de surface d'élément élargisseur 24, 26 et d'extrémité libre d'armure 32, 30 sont deux à deux soudées ensemble grâce à un métal d'apport qui s'étend dans les deux cavités ouvertes latérales en formant deux cordons de soudure opposés 34, 36.

Avantageusement, ces deux cordons de soudure 34, 36 sont réalisés à par une méthode de soudage électrique, du type soudage à l'arc (« arc welding » en langue anglaise), et préférentiellement en atmosphère contrôlée, par exemple selon le procédé MIG (« Metal Inert Gas » en langue anglaise) ou MAG (« Metal Active Gas »)

La liaison entre les deux portions de surface respectives 24, 32 et 26, 30 est d'autant plus forte que les matériaux de l'extrémité libre d'armure 12 et de l'élément élargisseur 14 présentent les mêmes caractéristiques. C'est en espèce le cas et ainsi, la résistance mécanique des soudures est améliorée.

Ainsi, il a été découvert qu'en dépit des préjugés de l'homme du métier, ce mode de réalisation de l'invention permet de réaliser des embouts de fixation présentant une bonne résistance mécanique à l'arrachement. Les préjugés étaient liés au fait que les aciers à hautes caractéristiques mécaniques composant généralement les armures sont très sensibles à la température et voient leurs caractéristiques chuter fortement, en pratique de plus de 50% lorsqu'ils sont soumis à une température de plus de 1000°C . C'est pourquoi l'homme du métier évite généralement de soumettre ces fils à de telles températures, et d'utiliser des procédés de soudage à haute température nécessitant la mise en fusion de l'acier.

Il semble que les bonnes performances de ce mode de réalisation de l'invention soient principalement liées à l'orientation longitudinale des deux cordons de soudure 34, 36. En effet, l'effort mécanique principal auquel doivent résister ces cordons de soudures est un cisaillement selon la direction D de l'armure, cisaillement qui tend à désolidariser l'élément élargisseur 14 de l'extrémité libre d'armure 12 lorsque l'embout de fixation subit une tension tendant à l'arracher. Or, le fait d'orienter les cordons de soudure parallèlement à cet effort de cisaillement permet, à dimensions égales, d'augmenter leur résistance à cet effort. Cet effet favorable compense partiellement la chute des caractéristiques mécaniques de l'acier au voisinage des soudures.

Avantageusement, la longueur L de l'élément élargisseur 14 est supérieure ou égale à 20mm, En outre, dans le cas où l'armure 10 présente une largeur I1 supérieure à 20mm, la longueur L est préférentiellement supérieure ou égale à la largeur I1. En effet, le fait d'augmenter la longueur L permet, à tension égale, de réduire les contraintes de cisaillement dans les cordons de soudure 34, 36, et donc d'augmenter la résistance à l'arrachement de l'embout de fixation. Par contre, l'augmentation excessive de la longueur L génère l'inconvénient d'augmenter la longueur de l'embout de fixation. Les longueurs indiquées plus haut offrent le meilleur compromis.

En outre, préférentiellement, les chanfreins 24, 26, 30, 32 ont une inclinaison par rapport au plan moyen défini par la surface de contact 16 de l'ordre de 45°, ce qui permet de faciliter l'opération de soudage tout en améliorant la résistance au cisaillement des soudures.

De plus, avantageusement, la hauteur h et la largeur a des chanfreins 24, 26, 30 ,32 sont comprises entre 45% et 75% de l'épaisseur e1 de l'armure, et préférentiellement comprises entre 55% et 70%. Ainsi, il a été observé que la résistance à l'arrachement de l'embout de fixation est encore améliorée.

On se référera maintenant à la Figure 3 illustrant un deuxième mode de mise en oeuvre de l'invention, sur laquelle les éléments similaires à ceux de l'objet représenté sur la Figure 1 portent des références identiques affectées d'un signe prime « ' ».

Ainsi on y retrouve une armure 10' présentant une extrémité libre d'armure 12' laquelle est surmontée d'un élément élargisseur 14'. Ce dernier est de section rectangulaire identique à celle de l'extrémité libre d'armure 12', et il est ajusté en retrait d'un bord d'extrémité 40 de l'extrémité libre d'armure 12'. En outre, l'élément élargisseur 14' présente une section avant 42 et une section arrière 44 en arrière du dessin, et l'extrémité libre d'armure 12' présente une surface d'appui 28'. Les sections avant 42 et arrière 44 et la surface d'appui 28' forment alors respectivement des portions de surface définissant aussi deux cavités ouvertes opposées et transversales, dans lesquelles s'étendent deux cordons de soudure opposés 34', 36'. Ces cordons de soudure sont réalisés de manière identique à ceux décrits ci-dessus à l'endroit de la Figure 1. De la sorte, l'élément élargisseur 14' est solidaire de l'extrémité libre d'armure 12'.

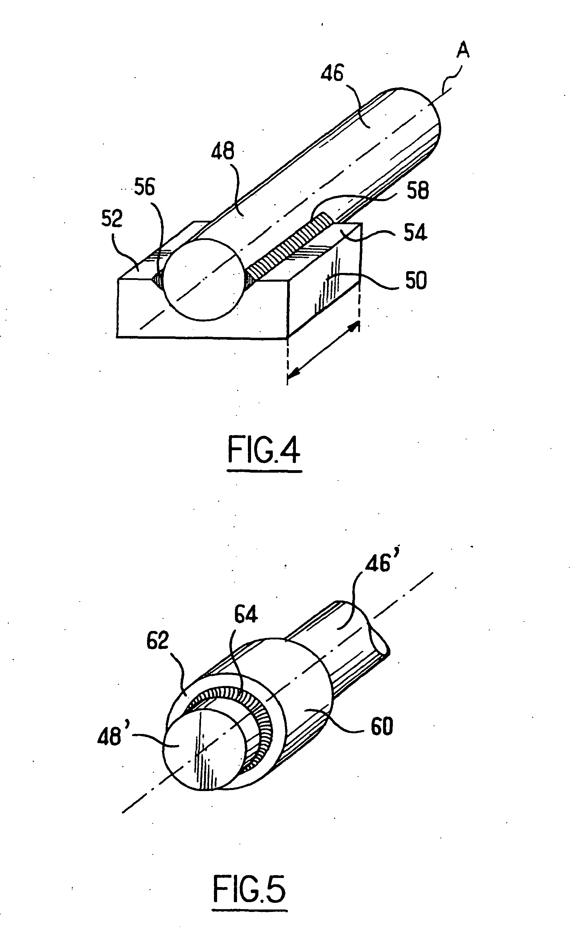

On se référera maintenant à la Figure 4, illustrant un troisième mode de mise en oeuvre de l'invention. La Figure 4 montre une armure 46 faite d'un fils d'acier rond et un élément élargisseur 50 faite d'un berceau. L'armure 46 présente une extrémité libre d'armure 48 et le berceau 50 qui s'étend longitudinalement selon l'axe A de l'extrémité libre d'armure 48, présente une surface demi-cylindrique, dont la directrice est un cercle et qui coïncide avec la section de l'extrémité libre d'armure 48. Le berceau 50 présente alors des rebords opposés 52, 54 de chaque côté de la surface demi-cylindrique.

De la sorte, l'extrémité libre d'armure 48 qui définit une surface externe libre, en appui contre la surface demi-cylindrique, définit deux doubles portions de surface respectivement avec les deux rebords opposés 52, 54, formant alors deux cavités ouvertes longitudinales, dans lesquelles cavités ouvertes s'étendent respectivement deux cordons de soudure longitudinaux opposés 56, 58.

Enfin, selon un quatrième mode de mise en oeuvre illustré sur la Figure 5, où l'armure 46' est faite d'un fil d'acier rond analogue à celui illustré sur la Figure 4, présentant une extrémité libre d'armure 48', l'élément élargisseur 60 lui est constitué d'une couronne. La couronne 60 présente un bord circulaire 62 et l'extrémité libre d'armure 48' engagée dans la couronne 60 forment avec le bord circulaire 62 des portions de surface définissant une cavité ouverte circulaire. Dans cette cavité ouverte circulaire s'étend un cordon de soudure 64 qui relie ensemble les portions de surface et par là même, solidarise la couronne 60 et l'extrémité libre d'armure 48'.

Selon une caractéristique avantageuse, l'extrémité libre d'armure 48' peut être montée par frettage thermique dans la couronne 60.

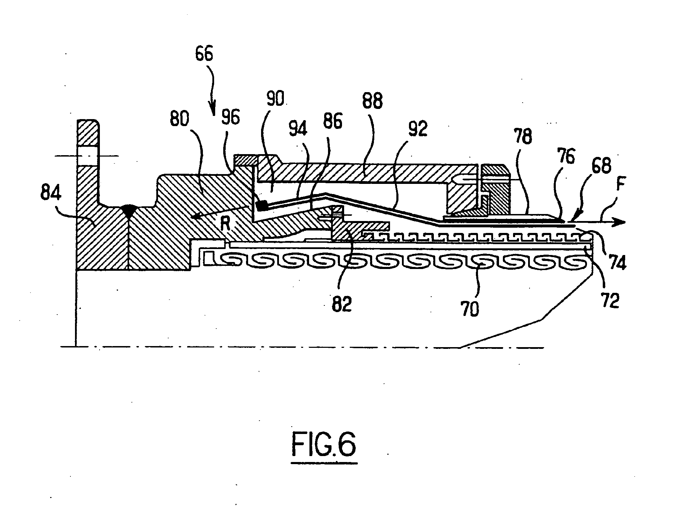

On se reportera à présent à la Figure 6 représentant un embout de fixation 66 conforme à l'invention dont les armures de traction sont respectivement équipées d'éléments élargisseurs.

La Figure 6 montre partiellement une conduite tubulaire flexible 68 présentant de l'intérieur vers l'extérieur, une carcasse interne 70, une gaine de pression interne 72, une couche d'armures de pression 74, deux couches d'armures de tension 76 et une gaine externe 78. L'embout de fixation 66 comprend lui, un manchon 80 présentant une partie de raccordement 82 à la conduite tubulaire flexible 68, et une partie de fixation 84 opposée à la partie de raccordement 82. La partie de raccordement 82 présente une portion de réception 86 des couches d'armures de tension 76.. En outre, l'embout de fixation 66 comporte une bague 88 montée autour de la partie de raccordement 82 et qui forme une chambre annulaire sensiblement étanche 90 autour de la portion de réception 86.

Par ailleurs, s'agissant de la conduite tubulaire flexible 68, les couches d'armures de traction 76 comportent des armures 92 dont les extrémités libres 94 sont aptes à s'étendre dans la chambre annulaire 90 et sont équipées d'éléments élargisseurs 96. Les éléments élargisseurs 96 et les extrémités libres d'armure 94 sont respectivement associés conformément à l'un quelconque des modes de mise en oeuvre précités en référence aux Figures 1 à 5.

Ainsi, selon un autre aspect, la présente invention concerne une méthode de raccordement de l'embout de fixation 66 à l'extrémité de la conduite tubulaire flexible 68. Selon ladite méthode, on monte tout d'abord le manchon 80 à l'extrémité de la conduite 68 en étendant les extrémités libres d'armure 94 au droit de la portion de réception 86. Ensuite, ou au préalable, on rapporte les éléments élargisseurs 96 sur les extrémités libres d'armure 94 pour en élargir localement la section droite. Puis on vient engager la bague 88 autour de la partie de raccordement 82 en formant la chambre annulaire 90 autour de la portion de réception 86. Les extrémités libres d'armure s'étendent alors dans la chambre annulaire 90. Et enfin, on vient couler une résine époxy qui prend alors en masse dans ladite chambre annulaire 90 pour y emprisonner les extrémités libres d'armure 94. Bien évidemment, grâce aux caractéristiques adhésives et mécaniques de la résine époxy après durcissement, les extrémités libres d'armure 94 sont maintenues en position fixe dans l'embout de fixation 66. En effet, la résine époxy forme un solide indéformable dans la chambre annulaire 90.

De la sorte, les efforts de traction F qui s'exercent sur les armures de traction des couches d'armures de traction 76 et qui se répercutent sur les extrémités libres d'armure 94 sont non seulement repris par l'effet cabestan procuré par les courbures des extrémités libres d'armure 94 dans la chambre annulaire 90, mais aussi et surtout grâce aux éléments élargisseurs 96 soudés à la surface des extrémités libres d'armure 94 qui opposent une résistance R orientée vers la partie de fixation 84 et opposée à l'effort de traction F.

## Revendications

1. Conduite tubulaire flexible (68) comprenant un embout de fixation (66), ladite conduite tubulaire flexible comprenant au moins une nappe d'armures de traction (76) enroulées à pas long, ledit embout de fixation comprenant une bague (88) et un manchon (80), ledit manchon présentant une partie de raccordement (82) à ladite conduite (68) et à l'opposé une partie de fixation (84), ladite partie de raccordement (82) présentant une portion de réception (86) des armures et ladite partie de raccordement (82) étant apte à être engagée dans ladite bague pour former une chambre annulaire (90) autour de ladite portion de réception (86), lesdites armures (10, 10', 46, 46', 92) de ladite nappe d'armures de traction (76) présentant une extrémité libre d'armure (12, 12', 48, 48', 94) adaptée à venir s'étendre dans ladite chambre annulaire (90) lorsque ledit manchon (80) est monté sur ladite conduite (86), ladite chambre annulaire (90) étant apte à recevoir une coulée d'un matériau adapté à prendre en masse à l'intérieur de ladite chambre annulaire (90), les extrémités libres d'armures présentant respectivement des moyens d'ancrage adaptés à être emprisonnés dans ledit matériau pris en masse pour bloquer lesdites extrémités libres en translation dans ladite chambre annulaire (90) ;
**caractérisée en ce que** lesdits moyens d'ancrage comprennent respectivement un élément élargisseur (14, 14', 50, 60, 96) fixé sur lesdites extrémités libres d'armure (12, 12', 48, 48', 94) ;
et **en ce que** les éléments élargisseurs (14, 14', 50, 60, 96) desdits moyens d'ancrage sont soudés auxdites extrémités libres d'armure (12, 12', 48, 48', 94).

2. Conduite tubulaire flexible selon la revendication 1, **caractérisée en ce que** lesdits éléments élargisseurs (14, 14', 50, 60, 96) sont formés en acier.

3. Conduite tubulaire flexible selon la revendication 2, **caractérisée en ce que** lesdits éléments élargisseurs (14, 14', 50, 60, 96) et lesdites extrémités libres d'armure (12, 12', 48, 48', 94) présentent respectivement au moins une portion de surface d'élément élargisseur (24, 26) et une portion de surface d'extrémité libre d'armure (32, 30) qui forment ensemble une cavité ouverte, et **en ce que** ladite cavité ouverte est rempli d'un métal d'apport pour solidariser ensemble lesdites portions de surface.

4. Conduite tubulaire flexible selon la revendication 3, **caractérisée en ce que** lesdites, portion de surface d'élément élargisseur et portion de surface d'extrémité libre d'armure (24, 26 ; 32, 30), s'étendent respectivement longitudinalement pour former une cavité ouverte longitudinale.

5. Conduite tubulaire flexible selon l'une quelconque des revendications 1 à 4, **caractérisée en ce que** lesdits éléments élargisseurs (14, 14', 96) s'étendent longitudinalement et **en ce qu'**ils présentent une section droite sensiblement rectangulaire et identique à la section droite desdites extrémités libres d'armure (12, 12', 94).

6. Conduite tubulaire flexible selon la revendication 4 et 5, **caractérisée en ce que** lesdits éléments élargisseurs (14, 14', 50, 96) et lesdites extrémités libres d'armure (12, 12', 48, 94) présentent respectivement des arêtes latérales (18, 20) chanfreinées de façon à former latéralement des cavités ouvertes longitudinales en V, lorsque lesdits éléments élargisseurs sont respectivement appliqués longitudinalement sur lesdites extrémités libres d'armure.

7. Conduite tubulaire flexible selon la revendication 6, **caractérisée en ce que** lesdites arêtes latérales (18, 20) sont chanfreinées de façon que lesdites, portion de surface d'élément élargisseur (24, 26) et portion de surface d'extrémité libre d'armure (32, 30) soient respectivement inclinées l'une de l'autre d'un angle compris entre 70 ° et 110°.

8. Conduite tubulaire flexible selon l'une quelconque des revendications 1 à 4, **caractérisée en ce que** lesdites extrémités libres d'armure (48, 48', 94) présentent une section droite circulaire, tandis que lesdits éléments élargisseurs (50, 60, 96) s'étendent respectivement au moins partiellement autour desdites extrémités libres d'armure.

9. Méthode de raccordement d'un embout de fixation (66) et d'une conduite tubulaire flexible (68), ladite conduite tubulaire flexible comprenant au moins une nappe d'armures de traction (76) enroulées à pas long, lesdites armures (10, 10', 46, 46', 92) de ladite nappe d'armures de traction (76) présentant une extrémité libre d'armure (12, 12', 48, 48', 94), ledit embout de fixation comprenant une bague (88) et un manchon (80), ledit manchon présentant une partie de raccordement (82) à ladite conduite (68) et à l'opposé une partie de fixation (84), ladite partie de raccordement (82) présentant une portion de réception (86) des armures, ladite méthode de raccordement étant du type selon laquelle :
- on monte ledit manchon (80) à l'extrémité de ladite conduite tubulaire flexible (68) ;
- on forme des moyens d'ancrage aux extrémités libres d'armures ;
- on étend lesdites extrémités libres d'armure (12, 12', 48, 48', 94) au droit de ladite portion de réception (86) ;
- on engage ladite bague (88) autour ladite partie de raccordement (82) pour former une chambre annulaire (90) autour de ladite portion de réception (86) ;
- on coule un matériau adapté à prendre en masse à l'intérieur de ladite chambre annulaire (90) pour emprisonner lesdits moyens d'ancrage et bloquer lesdites extrémités libres en translations dans ladite chambre annulaire (90) ;
**caractérisée en ce qu'**on fixe un élément élargisseur (14, 14', 50, 60, 96) sur lesdites extrémités libres d'armure (12, 12', 48, 48', 94) par soudure pour former lesdits moyens d'ancrage.

## Claims

1. Flexible tubular pipe (68) comprising an end fitting (66), said flexible tubular pipe comprising at least one sheet of tensile armor layers (76) wound with a long pitch, said end fitting comprising a ring (88) and a sleeve (80), said sleeve having a portion (82) for connection to said pipe (68) and at the opposite end an attachment portion (84), said connection portion (82) having a portion (86) for housing the armor layers and said connection portion (82) being capable of being engaged in said ring in order to form an annular chamber (90) about said housing portion (86), said armor layers (10, 10', 46, 46', 92) of said sheet of tensile armor layers (76) having a free end of armor layer (12, 12', 48, 48', 94) suitable for extending into said annular chamber (90) when said sleeve (80) is mounted onto said pipe (86), said annular chamber (90) being capable of receiving a pouring of a material suitable for solidifying inside said annular chamber (90), the free ends of armor layers having respectively anchoring means suitable for being trapped in said solidified material in order to prevent said free ends from moving in translation in said annular chamber (90) ;
**characterized in that** said anchoring means comprise respectively a widener element (14, 14', 50, 60, 96) attached to said free ends of armor layer (12, 12', 48, 48', 94);
and **in that** the widener elements (14, 14', 50, 60, 96) of said anchoring means are welded to said free ends of armor layer (12, 12', 48, 48', 94).

2. Flexible tubular pipe as claimed in claim 1, **characterized in that** said widener elements (14, 14', 50, 60, 96) are made of steel.

3. Flexible tubular pipe as claimed in claim 2, **characterized in that** said widener elements (14, 14', 50, 60, 96) and said free ends of armor layer (12, 12', 48, 48', 94) have respectively at least one surface portion of widener element (24, 26) and one surface portion of free end of armor layer (32, 30) which together form an open cavity, and **in that** said open cavity is filled with a solder to secure said surface portions together.

4. Flexible tubular pipe as claimed in claim 3, **characterized in that** said widener element surface portion and free end of armor layer surface portion (24, 26; 32, 30) extend respectively longitudinally in order to form a longitudinal open cavity.

5. Flexible tubular pipe in any one of claims 1 to 4, **characterized in that** said widener elements (14, 14', 96) extend longitudinally and **in that** they have a cross section that is substantially rectangular and identical to the cross section of said free ends of armor layer (12, 12', 94).

6. Flexible tubular pipe as claimed in claims 4 and 5, **characterized in that** said widener elements (14, 14', 50, 96) and said free ends of armor layer (12, 12', 48, 94) have respectively lateral edges (18, 20) that are beveled so as to form laterally V-shaped longitudinal open cavities, when said widener elements are respectively applied longitudinally to said free ends of armor layer.

7. Flexible tubular pipe as claimed in claim 6, **characterized in that** said lateral edges (18, 20) are beveled so that said widener element surface portion (24, 26) and free end of armor layer surface portion (32, 30) are respectively inclined with respect to one another at an angle of between 70° and 110°.

8. Flexible tubular pipe as claimed in any one of claims 1 to 4, **characterized in that** said free ends of armor layer (48, 48', 94) have a circular cross section, while said widener elements (50, 60, 96) extend respectively at least partially around said free ends of armor layer.

9. A method for connecting an end fitting (66) and a flexible tubular pipe (68), said flexible tubular pipe comprising at least one sheet of tensile armor layers (76) wound with a long pitch, said armor layers (10, 10', 46, 46', 92) of said sheet of tensile armor layers (76) having a free end of armor layer (12, 12', 48, 48', 94), said end fitting comprising a ring (88) and a sleeve (80), said sleeve having a portion (82) for connection to said pipe (68) and at the opposite end an attachment portion (84), said connection portion (82) having a portion (86) for housing the armor layers, said connection method being of the type in which:
- said sleeve (80) is mounted at the end of said flexible tubular pipe (68);
- anchoring means are formed at the free ends of armor layers;
- said free ends of armor layer (12, 12', 48, 48', 94) are extended level with said housing portion (86);
- said ring (88) is engaged about said connection portion (82) in order to form an annular chamber (90) about said housing portion (86);
- a material suitable for solidifying inside said annular chamber (90) is poured in order to trap said anchoring means and prevent said free ends from moving in translation in said annular chamber (90);
**characterized in that** a widener element (14, 14', 50, 60, 96) is attached to said free ends of armor layer (12, 12', 48, 48', 94) by welding in order to form said anchoring means.

## Patentansprüche

1. Biegsame Rohrleitung (68) mit einer Befestigungsarmatur (66), wobei die biegsame Rohrleitung zumindest eine Schicht aus Zugbewehrungen (76) aufweist, die mit großer Gangart gewickelt sind, wobei die Befestigungsarmatur einen Ring (88) und eine Hülse (80) aufweist, wobei die Hülse einen Teil für den Anschluss (82) an die Rohrleitung (68) und an der entgegengesetzten Seite einen Befestigungsteil (84) aufweist, wobei der Anschlussteil (82) einen Abschnitt für die Aufnahme (86) der Bewehrungen aufweist und der Anschlussteil (82) dafür vorgesehen ist, in den Ring eingesetzt zu werden, um eine ringförmige Kammer (90) um den Aufnahmeabschnitt (86) zu bilden, wobei die Bewehrungen (10, 10', 46, 46', 92) der Zugbewehrungsschicht (76) ein freies Bewehrungsende (12, 12', 48, 48', 94) aufweisen, das dafür geeignet ist, sich in der ringförmigen Kammer (90) zu erstrecken, wenn die Hülse (80) an der Rohrleitung (86) montiert ist, wobei die ringförmige Kammer (90) dafür geeignet ist, ein eingegossenes Material aufzunehmen, das dafür geeignet ist, sich im Innern der ringförmigen Kammer (90) abzubinden, wobei die freien Bewehrungsenden jeweils Verankerungsmittel aufweisen, die dafür geeignet sind, in dem abgebundenen Material eingeschlossen zu werden, um die freien Enden in ihrer Bewegung in der ringförmigen Kammer (90) zu sperren; **dadurch gekennzeichnet, dass**
die Verankerungsmittel jeweils ein Verbreiterungselement (14, 14', 50, 60, 96) aufweisen, das an den freien Bewehrungsenden (12, 12', 48, 48', 94) befestigt ist;
und dass die Verbreiterungselemente (14, 14', 50, 60, 96) der Verankerungsmittel an den freien Bewehrungsenden (12, 12', 48, 48', 94) festgeschweißt sind.

2. Biegsame Rohrleitung nach Anspruch 1, **dadurch gekennzeichnet, dass** die Verbreiterungselemente (14, 14', 50, 60, 96) aus Stahl gebildet sind.

3. Biegsame Rohrleitung nach Anspruch 2, **dadurch gekennzeichnet, dass** die Verbreiterungselemente (14, 14', 50, 60, 96) und die freien Bewehrungsenden (12, 12', 48, 48', 94) jeweils zumindest einen Oberflächenabschnitt vom Verbreiterungselement (24, 26) und einen Oberflächenabschnitt vom freien Bewehrungselement (32, 30) aufweisen, die zusammen einen offenen Hohlraum bilden, und dass der offene Hohlraum mit einem Zusatzmetall gefüllt ist, um die Oberflächenabschnitte fest miteinander zu verbinden.

4. Biegsame Rohrleitung nach Anspruch 3, **dadurch gekennzeichnet, dass** sich der Oberflächenabschnitt vom Verbreiterungselement und der Oberflächenabschnitt vom freien Bewehrungselement (24, 26; 32, 30) jeweils in Längsrichtung erstrecken, um einen längsgerichteten offenen Hohlraum zu bilden.

5. Biegsame Rohrleitung nach einem der Ansprüche 1 bis 4, **dadurch gekennzeichnet, dass** die Verbreiterungselemente (14, 14', 96) sich in Längsrichtung erstrecken und dass sie einen im Wesentlichen rechtwinkligen Querschnitt aufweisen, der mit dem Querschnitt der freien Bewehrungsenden (12, 12', 94) identisch ist.

6. Biegsame Rohrleitung nach Anspruch 4 oder 5, **dadurch gekennzeichnet, dass** die Verbreiterungselemente (14, 14', 50, 96) und die freien Bewehrungsenden (12, 12', 48, 94) jeweils seitliche Kanten (18, 20) aufweisen, die derart abgeschrägt sind, dass sie seitlich längsgerichtete offene Hohlräume in V-Form bilden, wenn die Verbreiterungselemente jeweils in Längsrichtung auf den freien Bewehrungsenden aufgesetzt werden.

7. Biegsame Rohrleitung nach Anspruch 6, **dadurch gekennzeichnet, dass** die seitlichen Kanten derart (18, 20) abgeschrägt sind, dass der Oberflächenabschnitt vom Verbreiterungselement (24, 26) und der Oberflächenabschnitt vom freien Bewehrungselement (32, 30) jeweils in einem Winkel, der zwischen 70° und 110° beträgt, zueinander geneigt sind.

8. Biegsame Rohrleitung nach einem der Ansprüche 1 bis 4, **dadurch gekennzeichnet, dass** die freien Bewehrungsenden (48, 48', 94) einen kreisförmigen Querschnitt aufweisen, während die Verbreiterungselemente (50, 60, 96) sich jeweils zumindest teilweise um die freien Bewehrungsenden erstrecken.

9. Verfahren zum Anschluss einer Befestigungsarmatur (66) und einer biegsamen Rohrleitung (68), wobei die biegsame Rohrleitung zumindest eine Schicht aus Zugbewehrungen (76) aufweist, die mit großer Gangart gewickelt sind, wobei die Bewehrungen 10, 10', 46, 46', 92) der Zugbewehrungsschicht (76) ein freies Bewehrungsende (12, 12', 48, 48', 94) aufweisen, wobei die Befestigungsarmatur einen Ring (88) und eine Hülse (80) aufweist, wobei die Hülse einen Teil für den Anschluss (82) an die Rohrleitung (68) und an der entgegengesetzten Seite einen Befestigungsteil (84) aufweist, wobei der Anschlussteil (82) einen Abschnitt für die Aufnahme (86) der Bewehrungen aufweist, wobei das Verfahren von dem Typ ist, wonach
- die Hülse (80) an dem Ende der biegsamen Rohrleitung (68) montiert wird;
- Verankerungsmittel an den freien Bewehrungsenden gebildet werden;
- sich die freien Bewehrungsenden (12, 12', 48, 48', 94) rechtwinklig zu dem Aufnahmeabschnitt (86) erstrecken;
- der Ring (88) um den Anschlussteil (82) eingesetzt wird, um eine ringförmige Kammer (90) um den Aufnahmeabschnitt (86) zu bilden;
- ein Material, das dafür geeignet ist, sich im Innern der ringförmigen Kammer (90) abzubinden, eingegossen wird, um die Verankerungsmittel einzuschließen und die freien Enden in ihrer Bewegung in der ringförmigen Kammer (90) zu sperren;
**dadurch gekennzeichnet, dass** ein Verbreiterungselement (14, 14', 50, 60, 96) an den freien Bewegungsenden (12, 12', 48, 48', 94) durch Festschweißen befestigt wird, um die Verankerungsmittel zu bilden.
